# EUROPEAN PATENT SPECIFICATION

(11) **EP 1 105 752 B1**
(45) Date of publication and mention of the grant of the patent: **30.10.2002**
(21) Application number: 99941007.9
(22) Date of filing: 09.08.1999
(51) Int. Cl.: G02B 5/08, G02B 1/04

(54) **CONTAMINANT RESISTANT, CLEANABLE, LIGHT REFLECTIVE SURFACE**
VERUNREINIGUNGSWIDERSTANDSFÄHIGE - REINIGBARE - LICHTREFLEKTIERENDE OBERFLÄCHE
SURFACE REFLECHISSANT LA LUMIERE, POUVANT ETRE NETTOYEE ET RESISTANT AUX CONTAMINANTS

(30) Priority: 18.08.1998 US 135810
(43) Date of publication of application: 13.06.2001
(73) Proprietor: Gore Enterprise Holdings, Inc., Newark, DE 19714-9206 (US)
(72) Inventor: CONNORS, William, T., Newark, DE 19711 (US); HARDIE, William, G., Landenberg, PA 19350 (US)
(74) Representative: Shanks, Andrew
(86) International application number: US9918082
(87) International publication number: WO00011500

(56) References cited:
- EP-A- 0 724 181
- EP-A- 0 778 477
- US-A- 5 596 450
- US-A- 5 672 409

## Description

### BACKGROUND OF THE INVENTION

### 1. Field of the Invention

The present invention relates to surfaces used to reflect light, in particular to porous light reflective surfaces, and the prevention of contamination thereof.

### 2. Description of Related Art

An article for reflecting light according to the preamble of claim 1 is described in EP-A-724 181.

Light reflective surfaces are used over a broad spectrum of applications for a wide variety of purposes. They are often used to redirect light favorably onto a desired surface, object, or area. Conversely, they may be employed to reduce, either in part or in full, the amount of light which reaches a surface, object, or area.

Light reflective surfaces can be generally classified as specular or diffuse. These general classifications refer, in actuality, to a continuum of possibilities. At one extreme, a perfectly specular surface would redirect an incident beam of light according to the law of reflection, where the angle of reflected light is equal to the angle of incident light in relation to the plane tangent to the reflective surface at the point of interest. At the other extreme, a perfectly diffuse surface would scatter the light in all directions according to a cosine distribution function. The degree to which a material is specular or diffuse can be classified by a bidirectional reflectance distribution function.

Examples of essentially specular reflective surfaces would be silvered mirrors, polished aluminum, and metalized films (such as SILVERLUX®, sold by 3M, St. Paul, MN). Examples of essentially diffuse surfaces would include magnesium oxide, expanded polytetrafluoroethylene (polytetrafluoroethylene is abbreviated herein as "PTFE"), other forms of porous PTFE (such as SPECTRALON®, sold by Labsphere, Inc., North Sutton, NH), as well as other porous polymers, such as nylon, polyvinylidene, and cellulose acetate. Examples of other surfaces on this continuum would be peened aluminum, which is substantially specular while at the same time providing some spreading of the light, in addition to white porcelain enamel, which is substantially diffuse while containing a significant specular component.

In many applications, it is quite often desirable, if not critical, to maximize the efficiency of the reflective surface. Light reflective surfaces which maximize reflectance, by definition, are made of materials which minimize both transmission and absorption of light over the range of wavelengths of interest.

For applications demanding a high level of diffuse reflectance (>92% reflective), expanded PTFE, as well as other forms of porous PTFE, are suitable materials. This is due in part to their extremely low absorption of light over a broad range of wavelengths from UV-C through Near IR (i.e., from 180 nm to 2500 Nm). Other factors which contribute to the success of the various forms of porous PTFE as a reflective material are their resistance to thermal, chemical, and UV degradation. Expanded PTFE has the added benefits of being thin, flexible, and conformable, and therefore easy and economical to install. Such highly efficient porous reflective materials have been successfully employed in many applications, including calibration standards, LCD backlights, photoinduction chambers, as well as various lighting fixtures, including compact fluorescent recessed downlights.

However, due to the nature of their structure, porous reflective materials are prone to ingress by low surface tension fluids. Many of these fluids absorb light and therefore reduce the reflectance. In some cases, the low surface tension component, such as a solvent or cleaner, will act as a carrier to bring light-absorbing substances into the pores. Therefore, any residue remaining on or in the structure of the porous reflective material diminishes the reflectance of the surface. These contaminants cannot be removed by conventional methods, thereby making in-situ extraction impossible or very difficult.

An improved material which is able to be cleaned by conventional techniques for use in reflecting UV and visible light is desirable.

### SUMMARY OF THE INVENTION

The present invention is a material and method for providing an improved reflector for UV and visible light which is both efficient and able to be cleaned by conventional techniques for use in any application requiring an efficient diffuse reflective surface. According to the present invention, there is provided an article for reflecting light in accordance with claim 1.

According to a preferred embodiment of the present invention, a sheet of expanded PTFE comprises the porous reflective material, and the barrier layer consists of a thin layer of Teflon® tetrafluoroethylene-hexafluoropropylene copolymers (FEP) or Teflon® tetrafluoroethylene-perfluoroalkyl vinyl ether copolymers (PFA) film (both available from E. I. DuPont de Nemours Inc., Wilmington, DE). This combination carries with it additional benefits to those listed above. First, since the material is highly flexible, a multiple sided cavity or parabolic shaped reflector may be readily formed from a single piece. This reduces the seams which are inherent in a multiple piece product, and thus total reflectance may be enhanced. Second, the material is easily die-cut, allowing each piece to be sized to the appropriate dimensions using clean and efficient methods. Third, expanded PTFE demonstrates excellent reflective properties even at relatively thin (e.g., <1 mm) thicknesses, making the composite lighter, reducing material volume, and being less expensive to employ than presently available materials. Since both components are very stable over time with respect to a wide range of environmental conditions, this composite is ideally suitable for applications requiring long life stability in harsh environmental conditions. Furthermore, both components have extremely low UV-visible light absorption which enables them to remain virtually unaffected when exposed to these often harmful wavelengths.

### DESCRIPTION OF THE DRAWINGS

The operation of the present invention should become apparent from the following description when considered in conjunction with the accompanying drawings, in which:
Figure 1 is a cross-sectional view of a reflective material according to an exemplary embodiment of this invention;
Figure 2 is a graph plotting reflectance versus wavelength for a commercially available material;
Figure 3 is a graph plotting reflectance versus wavelength for an exemplary embodiment of this invention;
Figure 4 is a graph plotting reflectance versus wavelength for a commercially available material; and
Figure 5 is a graph plotting reflectance versus wavelength for an exemplary embodiment of this invention.

### DETAILED DESCRIPTION OF THE INVENTION

The present invention relates to surfaces used to reflect light, and particularly to highly light reflective surfaces in the ultraviolet and visible wavelengths. As the term "light" is used herein, it is intended to include any form of electromagnetic radiation, but especially that in the spectrum of UV-visible light (250 to 750 nm wavelength) and through infrared (IR) light radiation (750 to greater than 2500 nm wavelength). These reflective surfaces may be used, for example, in illumination applications and in photoinduction chambers.

"Illumination" is meant to encompass a broad range of categories, such as lighting fixtures, displays, projection systems, vision systems, and lighted signs. Specific examples of illumination applications would include their use in luminaires, such as compact fluorescent recessed downlights, in backlights for liquid crystal displays, in photographic umbrellas, in roadside placards, and in machine vision systems.

"Photoinduction chamber" is meant to describe any volume of space where light energy is reflected in a controlled manner in order to effect a physical, chemical, or biological change due to light energy impinging upon some surface or substance. A photoinduction chamber would typically include one or more UV and/or visible light sources and at least one reflector for redirecting light toward a subject material. Additionally, the walls of the chamber can be constructed of a reflective material so as to redirect stray light to the target substrate and thus further enhance the efficiency of the system. The chamber can either be partially or totally enclosed to contain or direct the light energy. Typically, batch type processes employ a totally enclosed chamber whereas continuous processes would normally utilize a partially enclosed chamber.

In order to be commercially viable, all such reflectors must substantially retain their reflectance in the wavelength range of interest over time. Therefore, in applications where the reflective surface is exposed to contaminants which will significantly decrease the reflectance of the reflective material in the wavelength range of interest, any exposed surfaces should have the ability to resist such contaminants and be "cleanable" (i.e., adapted to have contaminants substantially removed by conventional techniques, such as wiping with isopropyl alcohol).

The present invention relates specifically to porous reflective materials, and the prevention of contaminant penetration thereof. Porous reflective materials are typically polymers and variations of such polymers that are well known to one skilled in the art. Porous polymeric structures may be filled, for example, with ceramic powders. Polymers with an index of refraction greater than or equal to 1.42 and a porosity between 10% and 90% are suitable for use as reflective materials. Examples of these include, but are not limited to, porous polymeric films made of PTFE, nylon, polyvinylidene fluoride (PVDF), cellulose acetate, polyester, polystyrene, polycarbonate, acrylic, polyacrylonitrile, methylmethacrylate, polypropylene, polyethylene, polyvinyl chloride, and polyamide. The specific polymer used in an application depends on the reflectance required, combined with other material property considerations such as temperature and chemical compatibility, strength, coefficient of thermal expansion, UV resistance, and cost.

Due to its high level of reflectance, as well as its resistance to thermal, chemical, and UV degradation, porous PTFE is a particularly suitable reflective material. A commercially available porous PTFE reflective material is sold under the trademark SPECTRALON by Labsphere, Inc., of North Sutton, NH. This material is a granular polytetrafluoroethylene material that is lightly packed and molded into a rigid block. While this material provides good reflectivity of visible and near IR light, its reflectance diminishes in the UV wavelengths below 325 nanometers. It also has other of drawbacks that constrain its use. These include difficulty in processing due to its rigidity, especially where non-planar reflective surfaces are required; limited range of effective light reflectance across UV-visible and IR light spectrum; relatively thick minimum thicknesses (i.e., its effective reflectance diminishes at thicknesses of less than about 4 mm); and less than optimum reflectivity.

For many reasons, the best porous reflective material available is expanded PTFE. Expanded PTFE, such as that made in accordance with United States Patents 3,953,566, 3,962,153, 4,096,227, 4,187,390, and 4,902,423, may be utilized as a highly efficient diffuse reflector. This expanded PTFE material comprises a microporous structure of microscopic polymeric fibrils (i.e., thread-like elements) interconnecting polymeric nodes (i.e., particles from which fibrils emerge). As the term "expanded PTFE" is used herein, it is intended to include any PTFE material having a node and fibril structure, including the range from a slightly expanded structure having fibrils extending from relatively large nodes of polymeric material, to an extremely expanded structure having fibrils which merely intersect one another at nodal points.

Expanded PTFE has a number of important properties that make it particularly suitable as a reflective surface. First, PTFE is a highly inert material that is hydrophobic. Accordingly, the material is resistant to attack by both water and a wide variety of other materials that could damage some other reflective surfaces. Additionally, by expanding PTFE in the manner taught by United States Patent 3,953,566 to form the node and fibril structure, the material undergoes a significant increase in tensile strength and becomes highly flexible. Moreover, while packed granular PTFE provides good reflective properties, the node and fibril structure of expanded PTFE provides much higher reflectance.

Although porous reflective materials are quite useful, they have heretofore not been suitable for use in many applications because the porous structure allows the penetration of low surface tension fluids, such as solvents, grease, and oils, including human hand oils. These fluids absorb light, which causes a corresponding loss in reflectance of the porous reflective material. When sufficiently contaminated, the sheet may become almost entirely absorptive. Attempts to clean the porous reflective surface by conventional techniques, such as wiping with isopropyl alcohol, result in little, if any, restoration of the material's initial reflectance properties. The exposed surface is cleaned, but the bulk of the damaging contamination remains in the porous structure. Therefore, porous reflective materials alone may be unsuitable in an application where the reflective surface is exposed to an environment containing a damaging amount of such contaminants.

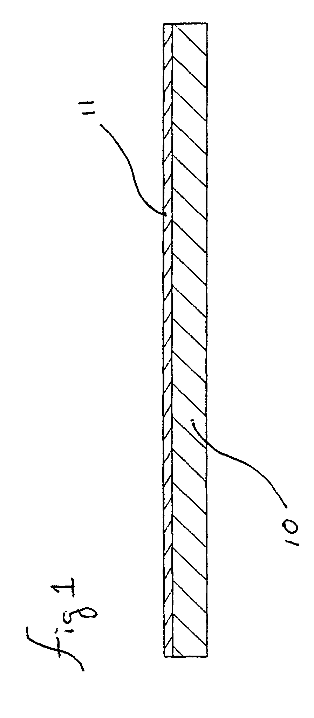

The present invention provides an improved means by which porous polymers may be used as a reflective surface in applications exposing the polymers to contaminants and requiring cleanability. This new reflective composite is a combination of one of the porous polymers described above and a transparent barrier layer. Figure 1 illustrates the invention. A layer of a reflective material 10 is shown in laminar attachment to a transparent barrier layer 11.

The barrier layer preferably substantially covers the entire portion of the porous surface which is exposed to the damaging contaminants and is intended to reflect light. This barrier layer should be essentially transparent to the light spectra of interest, should not allow any penetration of contaminants, and should not experience negative effects when exposed to conventional cleaning solvents, such as isopropyl alcohol. Additional considerations for the barrier layer, depending on the requirements of different applications, include ability to bond to the porous reflective surface, degree of flexibility, resistance to UV degradation, temperature range tolerance, and thickness. As an example, for a UV curing photoinduction chamber, Teflon PFA and Teflon FEP are good choices because they are essentially transmissive to UV light, suffer no ill effects with UV exposure, are chemically inert, are flexible, are able to withstand relatively high maximum temperatures (broad temperature range), have excellent non-stick properties (and thus are easily cleaned), and bond well to the porous reflective material, preferably expanded PTFE.

In addition to Teflon PFA and Teflon FEP films, other useful barrier layers include, but are not limited to, polymers such as full-density PTFE, polycarbonate, polymethylmethacrylate, polyester, polystyrene, polyvinylidene fluoride, polyethylene, polypropylene, polyetheretherketone, polyethersulfone, and many other plastics which offer low absorbance in the frequency range of interest to the user. In addition, a suitable glass, or quartz would serve as an effective barrier layer in many applications where flexibility may not be required.

A preferred reflective material of the present invention, incorporating a biaxially expanded PTFE as the porous reflective material and Teflon FEP as the transparent barrier layer, is made in the following manner. A fine powder PTFE resin is blended with a lubricant, such as odorless mineral spirits, until a compound is formed. The volume of lubricant used should be sufficient to lubricate primary particles of the PTFE resin so as to minimize the potential of the shearing of the particles prior to extruding.

The compound is then compressed into a billet and extruded, such as through a ram type extruder, to form a coherent sheet of extrudate. A reduction ratio of about 30:1 to 300:1 may be used (i.e., reduction ratio = cross-sectional area of extrusion cylinder divided by the cross-sectional area of the extrusion die). For most applications a reduction ratio of 75:1 to 100:1 is preferred.

The lubricant may then be removed, such as through volatilization, and the dry coherent extrudate sheet is expanded rapidly in at least one direction about 1.1 to 50 times its original length (with about 1.5 to 2.5 times being preferred). Expansion may be accomplished by passing the dry coherent extrudate over a series of rotating heated rollers or heated plates at a temperature of between about 100 and 325°C, such as in the method taught in United States Patent 3,953,566. Alternatively, the extruded sheet may be expanded in the manner described in United States Patent 4,902,423, prior to removal of the lubricant.

In either case, the material may be further expanded at a ratio of 1.1:1 to 50:1 (with 5:1 to 35:1 being preferred) to form a final microporous sheet. Preferably the sheet is biaxially or multi-axially expanded so as to increase its strength in both its longitudinal and transverse directions. Finally, the material may be subjected to an amorphous locking step by exposing it to a temperature in excess of 340°C.

The material of the present invention is preferably made in the form of sheets, which, due to their inherent flexibility, may be formed into a wide variety of other shapes as desired, such as tubes, strips, convex or concave structures, etc. Additionally, to address particular applications, the material of the present invention may likewise be extruded or otherwise formed into continuous tubes, rods (i.e., cylinders), rectangles, uneven shapes, and other structures that may be of interest.

Sheets made from the above processing steps can be produced in thicknesses ranging from, but not limited to, 0.01 mm to 12 mm or more. Sheets can be subsequently layered upon themselves and subjected to temperatures ranging from about 300°C to 400°C while applying sufficient pressures to bond the layers together.

A layer of Teflon FEP is then bonded to the expanded PTFE by applying pressure at an elevated temperature. The pressure is typically below 50 psi, but preferably less than 5 psi, with a preferred range between 0.5 and 5 psi. The temperature is typically between 250°C and 350°C, but preferably about 300°C. The pressure needs to be adequate to effect a sufficient bond, but minimized to prevent excessive compression of the expanded PTFE sheet to which it is bonded. By incorporating a transparent barrier layer, the high efficiency of expanded PTFE may be taken advantage of in applications risking contamination. The composite resists contamination better than expanded PTFE alone, and may be completely restored to its initial reflectance value by wiping with a common solvent such as isopropyl alcohol. While the efficiency is not significantly affected, the addition of the barrier layer causes expanded PTFE to become less diffuse. This can be minimized by minimizing the thickness of the barrier material and minimizing pressure during the bonding process. As an alternative embodiment, the barrier layer may be disposed on the reflective material using an adhesive, which bonds the layers together.

The present invention may comprise single or multiple layers of a porous reflective material, or may comprise a laminate of one or more layers of a porous reflective material and a backing support material. Since some porous reflective materials, particularly porous polymers, tend to be susceptible to stretching and distortion if placed under load or when exposed to heat, it may be preferred that the porous reflector be mounted to a support layer, such as through lamination to a flexible woven or non-woven material, that will help maintain the shape of the porous reflector during use. One suitable support layer is attached by applying an adhesive material, such as moisture curable polyurethane or solvated polyurethane, to the porous reflective material and then affixing to it a flexible backing material (e.g., polyester, polypropylene, Mylar® polyester, Kevlar® polyaramid, nylon, etc.). The two materials can be bonded to each other under applied pressure, such as by rolling the material between one or more pairs of nip rollers.

In addition, to create complex shapes, a flexible porous reflective sheet, such as expanded PTFE, can be bonded to a rigid support material and then formed as a composite into shapes, such as parabolic or ellipsoidal domes. One suitable method for such forming techniques comprises using vacuum forming devices.

Without intending to limit the scope of the present invention, the following examples are presented.

### COMPARATIVE EXAMPLE 1

A layered expanded PTFE material available from W. L. Gore & Associates as Gore-Tex® GR sheet gasketing was obtained. This material had 25 layers of expanded PTFE sheets and had a total thickness of 1.0 mm and a density of 0.57 g/cc.

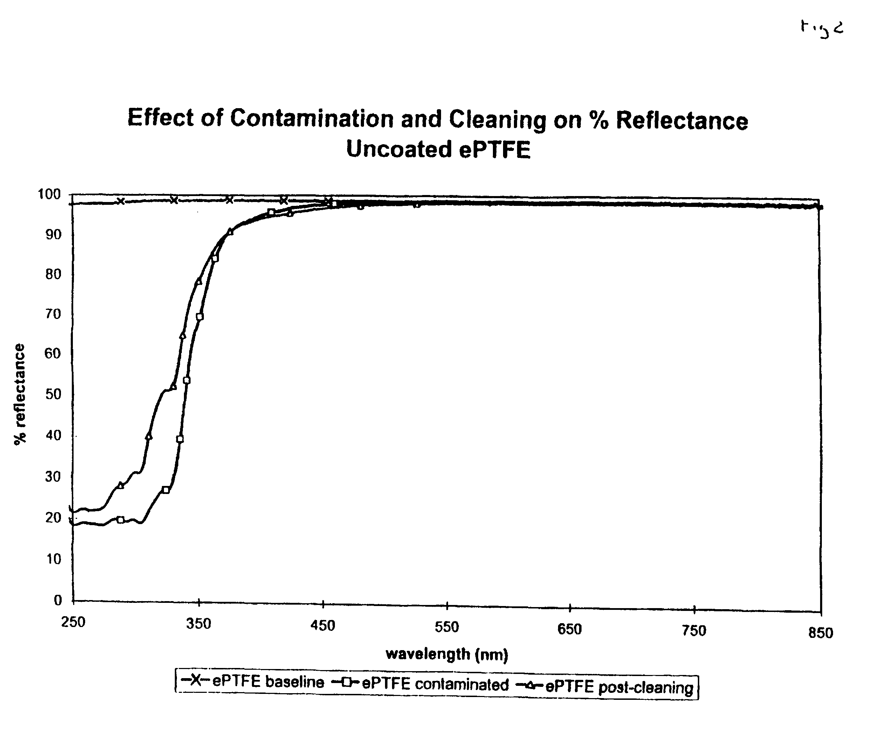

This material was tested for cleanability as follows. An approximately 2" by 2" swatch was cut from the sheet for reflectance testing. The sample was tested using a Perkin Elmer Lambda 18 Spectrophotometer over the UV-Vis spectrum (250-800 nm). The sample was then contaminated by dipping a towel into 10 wt hydraulic oil and rubbing the oil onto the sample with the towel. The reflectivity of the sample was again quantified, and a dramatic (>50%) drop in reflectivity from the original values was observed. The sample was then cleaned with a lint-free cloth and isopropyl alcohol, and its reflectivity measured and reported in Figure 2. As shown in Figure 2, the reflectivity of the sample remained well below the original value, despite the fact that the reflective surface appeared to be clean.

### EXAMPLE 1

The material of Comparative Example 1 was bonded to a layer of .0005" thick Teflon FEP. This was accomplished by lightly pressing (less than 5 psi) the expanded PTFE and the Teflon FEP together with a Carver laboratory press at 300°C for 10 seconds. It was useful to wear powder-free latex gloves while handling the materials, and to place the laminate between layers of .002" Kapton polyimide film during the bonding operation to prevent contamination of the reflective materials either from the hands or the press itself.

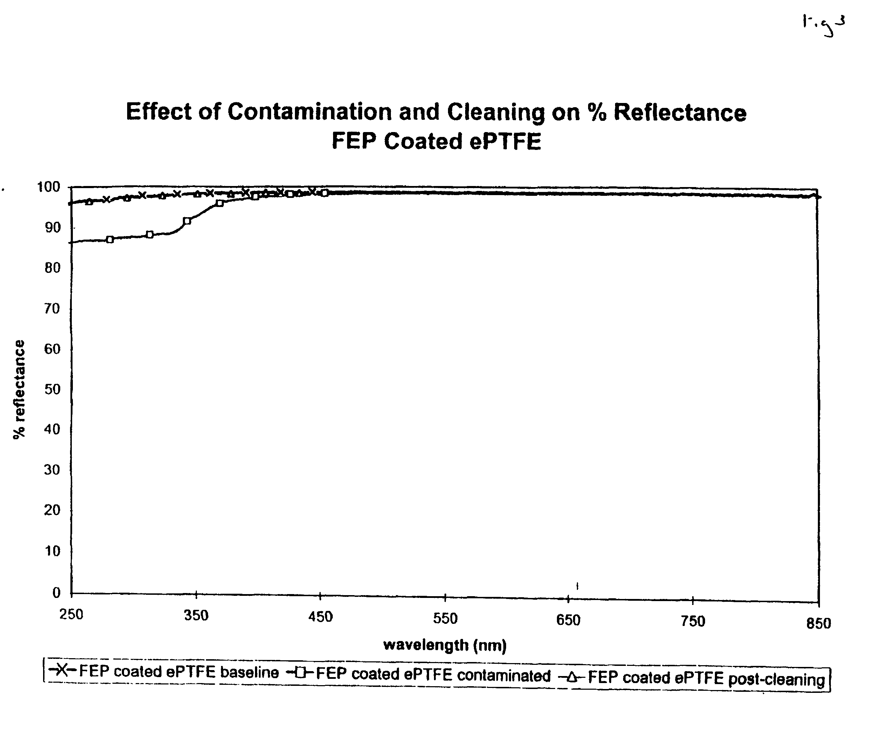

An approximately 2" by 2" swatch was then cut from the sample for reflectivity testing. The sample was tested using a Perkin Elmer Lambda 18 Spectrophotometer over the UV-Vis spectrum. The sample was then contaminated by rubbing with a towel containing 10 wt hydraulic oil as in Comparative Example 1. Its reflectivity was again quantified, and a significant drop in reflectivity from the original values was observed. The sample was then cleaned with a lint-free cloth and isopropyl alcohol, and its reflectivity measured and reported in Figure 3. As shown in Figure 3, the reflectivity of the sample was completely restored to its original value.

### COMPARATIVE EXAMPLE 2

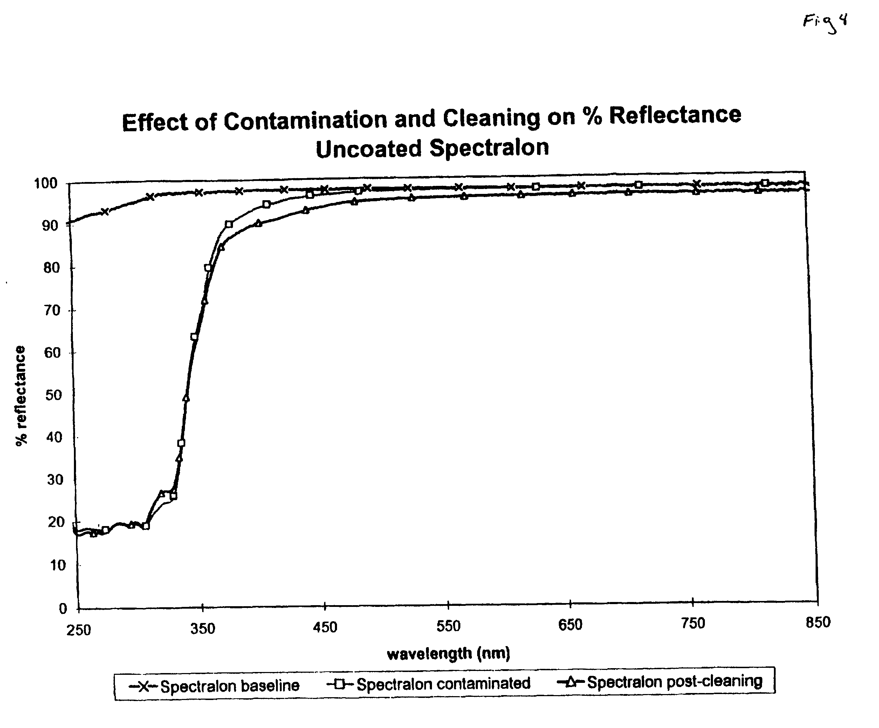

A sample of Spectralon PTFE underwent the same contamination and cleanability testing as the material of Comparative Example 1, with results reported in Figure 4. As can be observed from Figure 4, the reflectance value was dramatically affected by the contamination, and could not be restored by cleaning with isopropyl alcohol.

### EXAMPLE 2

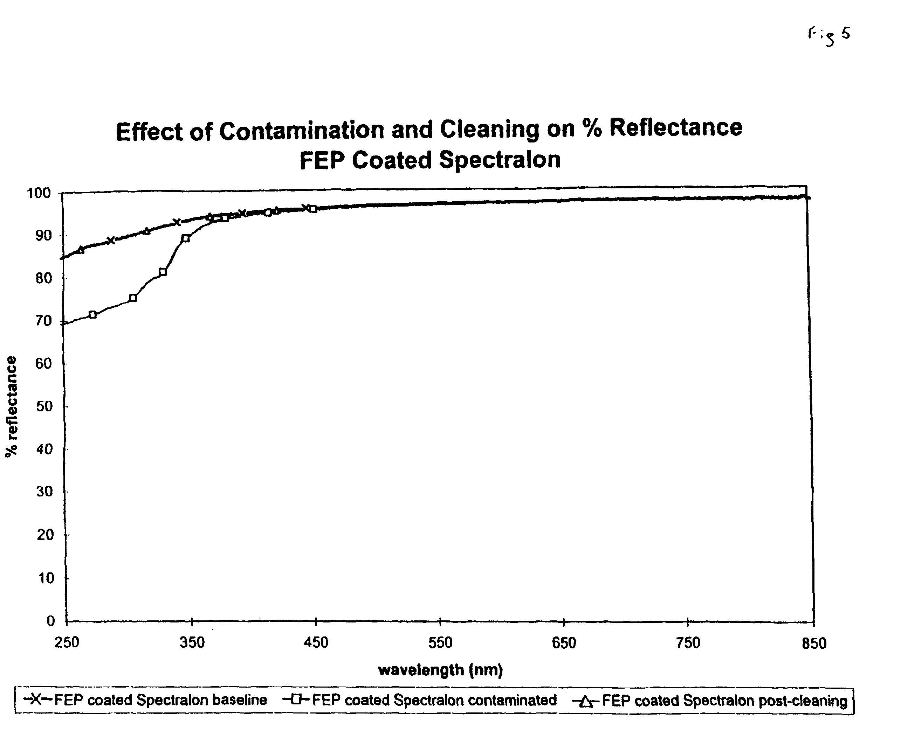

The sample of SPECTRALON PTFE of Comparative Example 2 was bonded to a layer of .0015" thick Teflon FEP in the same manner as in Example 1. The composite was then subjected to the same contamination and cleanability testing as the material of Comparative Example 1, with results reported in Figure 5. Figure 5 shows that although the contamination significantly reduced the reflectance of the composite, cleaning with isopropyl alcohol completely restored its reflectance to the original value.

### PROPHETIC EXAMPLE 1

The material of Comparative Example 1 will be bonded to a layer of .0005" thick Teflon PFA. This will be accomplished by lightly pressing (less than 5 psi) the expanded PTFE and the Teflon PFA together with a Carver laboratory press at 300°C for 10 seconds. It will be useful to wear powder-free latex gloves while handling the materials, and to place the laminate between layers of .002" Kapton polyimide film during the bonding operation to prevent contamination of the reflective materials either from the hands or the press itself.

An approximately 2" by 2" swatch will then cut from the sample for reflectivity testing. The sample will be tested using a Perkin Elmer Lambda 18 Spectrophotometer over the UV-Vis spectrum. The sample will then be contaminated by rubbing with a towel containing 10 wt hydraulic oil as in Comparative Example 1. Its reflectivity will again be quantified, and a significant drop in reflectivity from the original values should be observed. The sample will then be cleaned with a lint-free cloth and isopropyl alcohol, and its reflectivity measured. The reflectivity should return to its original value.

While particular embodiments of the present invention have been illustrated and described herein, the present invention should not be limited to such illustrations and descriptions. It should be apparent that changes and modifications may be incorporated and embodied as part of the present invention within the scope of the following claims.

## Claims

1. An article for reflecting light comprising a layer of a porous reflective material (10) and a cleanable transparent barrier layer (11) disposed over at least a portion of said layer of reflective material whereby contamination of said porous reflective material by low surface tension materials is prevented, **characterised in that** the transparent barrier layer (11) is of tetrafluoroethylene-hexafluoropropylene copolymers (FEP) or tetrafluoroethylene perfluoroalkyl vinyl ether copolymers (PFA).

2. An article as claimed in claim 1, wherein said porous reflective material (10) is diffusely reflective.

3. An article as claimed in claim 1 or 2, wherein said porous reflective material (10) is selected from polytetrafluoroethylene, nylon, polyvinylidene, cellulose acetate, polyester, polystyrene, polycarbonate, acrylic, polyacrylonitrile, methylmethacrylate, polypropylene, polyethylene, polyvinyl chloride, and polyamide.

4. An article as claimed in any of claims 1 to 3, wherein said transparent barrier layer (11) is directly disposed on said layer of reflective material (10).

5. An article as claimed in any preceding claim, wherein said porous reflective material (10) is expanded PTFE.

6. An article as claimed in any preceding claim, wherein said transparent barrier layer (11) is bonded to said layer of a porous reflective material (10).

7. An article as claimed in any preceding claim, further comprising a support layer attached to said layer of a porous reflective material (10).

8. An article as claimed in claim 7, wherein said support layer is selected from polyester, polypropylene, Mylar® polyester, Kevlar® polyaramid, and nylon.

9. An article as claimed in any preceding claim, wherein said layer of a porous reflective material (10) is between about 0.01mm and about 12mm thick.

10. An article as claimed in claim 9, wherein said layer of a porous reflective material (10) is 1.0mm thick.

11. An article as claimed in any preceding claim, wherein said transparent barrier layer (11) is between about 0.00254mm (0.0001 inches) and about 2.54mm (0.1 inches) thick.

12. An article as claimed in any preceding claim, wherein there are a plurality of said layers of a porous reflective material (10).

13. A method of making a reflective article comprising the steps of: (a) providing a layer of a porous reflective material; (b) providing a cleanable transparent barrier layer; (c) disposing said transparent barrier layer over at least a portion of said reflective material whereby contamination of said portion of said porous reflective material by low surface tension materials is prevented; **characterised in that** said transparent barrier layers is of tetrafluoroethylene-hexafluoropropylene copolymers (FEP) or tetrafluoroethylene perfluoroalkyl vinyl ether copolymers (PFA).

14. A method as claimed in claim 13, in which said layer of reflective material is bonded to the cleanable transparent barrier layer.

15. A method as defined in claim 14, wherein said bonding step comprises heating said layer of a reflective material and said transparent barrier layer to a temperature between about 250°C and about 350°C while simultaneously applying a pressure of less than about 345 kPa (50 psi) to said layer of a reflective material and said transparent barrier layer.

16. A method as defined in claim 15 wherein said temperature is about 300°C and said pressure is less than about 34.5 kPa (5 psi).

## Patentansprüche

1. Lichtreflektierender Gegenstand, umfassend eine Schicht aus einem porösen, reflektierenden Material (10) und eine reinigbare transparente Sperrschicht (11) über mindestens einem Teil der Schicht aus reflektierendem Material, wodurch eine Verunreinigung des porösen, reflektierenden Materials durch Materialien mit geringer Oberflächenspannung verhindert wird, **dadurch gekennzeichnet, daß** die transparente Sperrschicht (11) eine Schicht aus Tetrafluorethylen-Hexafluorpropylen-Copolymeren (FEP) oder Tetrafluorethylen-Perfluoralkylvinylether-Copolymeren (PFA) ist.

2. Gegenstand nach Anspruch 1, bei dem das poröse, reflektierende Material (10) diffus reflektierend ist.

3. Gegenstand nach Anspruch 1 oder 2, bei dem das poröse, reflektierende Material (10) ausgewählt ist aus Polytetrafluorethylen, Nylon, Polyvinyliden, Celluloseacetat, Polyester, Polystyrol, Polycarbonat, Acrylharz, Polyacrylonitril, Methylmethacrylat, Polyproplyen, Polyethylen, Polyvinylchlorid und Polyamid.

4. Gegenstand nach einem der Ansprüche 1 bis 3, bei dem die transparente Sperrschicht (11) direkt auf die Schicht aus reflektierendem Material (10) niedergeschlagen ist.

5. Gegenstand nach einem vorhergehenden Anspruch, bei dem das poröse reflektierende Material (10) expandiertes PTFE ist.

6. Gegenstand nach einem vorhergehenden Anspruch, bei dem die transparente Sperrschicht (11) auf die Schicht aus porösem, reflektierendem Material (10) aufgebondet ist.

7. Gegenstand nach einem vorhergehenden Anspruch, weiterhin umfassend eine Trägerschicht, die an der Schicht aus porösem, reflektierendem Material (10) befestigt ist.

8. Gegenstand nach Anspruch 7, bei dem die Trägerschicht ausgewählt ist aus Polyester, Polypropylen, Mylar®-Polyester, Kevlar®-Polyaramid und Nylon.

9. Gegenstand nach einem vorhergehenden Anspruch, bei dem die Schicht aus porösem, reflektierendem Material (10) eine Dicke zwischen etwa 0,01 mm und etwa 12 mm besitzt.

10. Gegenstand nach Anspruch 9, bei dem die Schicht aus porösem, reflektierendem Material (10) 1,0 mm dick ist.

11. Gegenstand nach einem vorhergehenden Anspruch, bei dem die transparente Sperrschicht (11) eine Dicke zwischen etwa 0,00254 mm (0,0001 Zoll) und etwa 2,54 mm (0,1 Zoll) aufweist.

12. Gegenstand nach einem vorhergehenden Anspruch, bei dem es eine Mehrzahl von Schichten aus einem porösen, reflektierenden Material (10) gibt.

13. Verfahren zum Herstellen eines reflektierenden Gegenstands, umfassend die Schritte: (a) Bereitstellen einer Schicht eines porösen, reflektierenden Materials; (b) Schaffen einer reinigbaren transparenten Sperrschicht; (c) Niederschlagen der transparenten Sperrschicht über zumindest einem Teil des reflektierenden Materials, wodurch eine Verunreinigung des Teils des porösen, reflektierenden Materials durch Materialien mit geringer Oberflächenspannung verhindert wird; **dadurch gekennzeichnet, daß** die transparente Barrierenschicht aus Tetrafluorethylen-hexafluorpropylen-Copolymeren (FEP) oder Tetrafluorethylen-Perfluoroalkylvinylether-Copolymeren (PFA) besteht.

14. Verfahren nach Anspruch 13, bei dem die Schicht aus reflektierendem Material auf die reinigbare transparente Sperrschicht gebondet ist.

15. Verfahren nach Anspruch 14, bei dem der Schritt des Bondens umfaßt: Erhitzen der Schicht aus einem reflektierenden Material und der transparenten Sperrschicht auf eine Temperatur zwischen etwa 250°C und etwa 350°C, während gleichzeitig ein Druck von weniger als etwa 345 kPa (50 psi) auf die Schicht aus reflektierendem Material und die transparente Sperrschicht aufgebracht wird.

16. Verfahren nach Anspruch 15, bei dem die Temperatur etwa 300°C und der Druck weniger als etwa 34,5 kPa (5 psi) beträgt.

## Revendications

1. Pièce de réflexion de la lumière comprenant une couche d'un matériau poreux réfléchissant (10) et une couche de barrière transparente pouvant être nettoyée (11) placée sur au moins une partie de ladite couche de matériau réfléchissant, la pollution dudit matériau poreux réfléchissant par des matériaux de faible tension de surface étant ainsi empêchée, **caractérisée en ce que** la couche de barrière transparente (11) est en copolymères de tétrafluoroéthylène-hexafluoropropylène (FEP) ou en copolymères d'éther de tétrafluoroéthylène perfluoroalkyl-vinyle (PFA).

2. Pièce selon la revendication 1, dans laquelle ledit matériau poreux réfléchissant (10) est réflecteur de façon diffuse.

3. Pièce selon la revendication 1 ou 2, dans laquelle ledit matériau poreux réfléchissant (10) est sélectionné parmi le polytétrafluoroéthylène, le Nylon, le polyvinylidène, l'acétate de cellulose, le polyester, le polystyrène, le polycarbonate, l'acrylique, le polyacrilonitrile, le méthylmétacrylate, le polypropylène, le polyéthylène, le chlorure de polyvinyle, et le polyamide.

4. Pièce selon l'une quelconque des revendications 1 à 3, dans laquelle ladite couche de barrière transparente (11) est directement déposée sur ladite couche de matériau réfléchissant (10).

5. Pièce selon l'une quelconque des revendications précédentes, dans laquelle ledit matériau poreux réfléchissant (10) est du PTFE expansé.

6. Pièce selon l'une quelconque des revendications précédentes, dans laquelle ladite couche de barrière transparente est liée à ladite couche de matériau poreux réfléchissant (10).

7. Pièce selon l'une quelconque des revendications précédentes, comprenant, de plus, une couche de support fixée à ladite couche de matériau poreux réfléchissant (10).

8. Pièce selon la revendication 7, dans laquelle ladite couche de support est sélectionnée parmi le polyester, le polypropylène, le polyester Mylar®, le polyaramide Kevlar®, et le Nylon.

9. Pièce selon l'une quelconque des revendications précédentes, dans laquelle ladite couche de matériau poreux réfléchissant (10) est comprise entre environ 0,01 mm et environ 12 mm d'épaisseur.

10. Pièce selon la revendication 9, dans laquelle ladite couche de matériau poreux réfléchissant (10) a une épaisseur de 1,0 mm.

11. Pièce selon l'une quelconque des revendications précédentes, dans laquelle ladite couche de barrière transparente (11) est comprise entre 0,00254 mm (0,0001 pouce) et environ 2,54 mm (0,1 pouce) d'épaisseur.

12. Pièce selon l'une quelconque des revendications précédentes, dans laquelle il existe une pluralité desdites couches de matériau poreux réfléchissant (10).

13. Procédé de réalisation d'une pièce réfléchissante comprenant les étapes suivantes :
a) la prévision d'une couche de matériau poreux réfléchissant ;
b) la prévision d'une couche de barrière transparente pouvant être nettoyée ;
c) la disposition de ladite couche de barrière transparente sur au moins une partie dudit matériau réfléchissant, une pollution de ladite partie dudit matériau poreux réfléchissant par des matériaux de faible tension de surface étant ainsi empêchée ;
**caractérisé en ce que** ladite couche de barrière transparente est en copolymères de tétrafluoroéthylène-hexafluoropropylène (FEP) ou en copolymères d'éther de tétrafluoroéthylène perfluoroalkyl-vinyle (PFA).

14. Procédé selon la revendication 13, selon lequel ladite couche de matériau réfléchissant est liée à la couche de barrière transparente pouvant être nettoyée.

15. Procédé selon la revendication 14, selon lequel ladite étape de liaison comprend le chauffage de ladite couche de matériau réfléchissant et de ladite couche de barrière transparente à une température comprise entre environ 250°C et environ 350°C tout en appliquant une pression inférieure à environ 345 kPa (50 psi) à ladite couche de matériau réfléchissant et à ladite couche de barrière transparente.

16. Procédé selon la revendication 15, selon lequel ladite température est d'environ 300°C et ladite pression est inférieure à environ 34,5 kPa (5 psi).
